# EUROPÄISCHE PATENTSCHRIFT

(11) **EP 2 607 179 B1**
(45) Veröffentlichungstag und Bekanntmachung des Hinweises auf die Patenterteilung: **05.11.2014**
(21) Anmeldenummer: 12198547.7
(22) Anmeldetag: 20.12.2012
(51) Int. Cl.: B60R 19/34

(54) **Vorrichtung mit einstellbarer Steifigkeit zum Aufnehmen einer Aufprallenergie**
Device with adjustable rigidity for absorbing impact energy
Dispositif ayant une raideur réglable pour la réception d'une énergie de choc

(30) Priorität: 21.12.2011 DE 102011089432
(43) Veröffentlichungstag der Anmeldung: 26.06.2013
(73) Patentinhaber: ROBERT BOSCH GMBH, 70442 Stuttgart (DE)
(72) Erfinder: Holz, Dieter, 71563 Affalterbach (DE)

(56) Entgegenhaltungen:
- EP-A1- 2 360 065
- EP-A2- 1 792 786
- WO-A1-2011/035952
- WO-A1-2012/007209

## Beschreibung

### Stand der Technik

Die vorliegende Erfindung bezieht sich auf eine Vorrichtung mit einstellbarer Steifigkeit zum Aufnehmen einer Aufprallenergie und auf ein Verfahren zum Einstellen einer Steifigkeit einer derartigen Vorrichtung.

Zum Schutz von Fahrzeuginsassen bei Kollisionen werden häufig Crashboxen bzw. Aufprallstrukturen eingesetzt. Diese ersetzen Strukturen im Vorderwagen und/oder im Heck eines Fahrzeugs und können nach einem Unfall ausgetauscht werden.

Die EP 1 792 786 A2 zeigt eine Crashbox zur Eingliederung zwischen einem Stoßfängerquerträger und einem Fahrzeuglängsträger eines Kraftfahrzeugs. Die Crashbox weist ein gehäuseartiges Deformationsprofil als Faltkonstruktion aus Metallblech und eine längsträgerseitige Flanschplatte auf, dadurch gekennzeichnet, dass die Flanschplatte als Bestandteil der Faltkonstruktion ausgebildet ist.

Die WO 2011/035952 A1 befasst sich mit einer Vorrichtung zum adaptiven Abbau von Crashenergie und offenbart eine Vorrichtung gemäß dem Oberbegriff des Anspruchs 1. Eine Matrizenplatte bewirkt dabei eine Verjüngung eines Deformationselements. Die Matrizenplatte kann aus mindestens zwei einzelnen Segmenten gefertigt werden.

Die EP 2 360 065 A1 befasst sich mit einer Vorrichtung zum adaptiven Abbau von Crashenergie.

Die WO 2012/007209 A1 befasst sich mit einer Crashstruktur mit einstellbarer Steifigkeit für ein Deformationselement bei einem Fahrzeug. Die Crashstruktur weist verschiebbare Matrizensegmente auf.

### Offenbarung der Erfindung

Vor diesem Hintergrund wird mit der vorliegenden Erfindung eine Vorrichtung mit einstellbarer Steifigkeit zum Aufnehmen einer Aufprallenergie sowie ein Verfahren zum Einstellen einer Steifigkeit einer derartigen Vorrichtung gemäß den Hauptansprüchen vorgestellt. Vorteilhafte Ausgestaltungen ergeben sich aus den jeweiligen Unteransprüchen und der nachfolgenden Beschreibung.

Eine adaptive Crashstruktur kann auf Basis eines Verjüngungsabsorbers arbeiten. Hier wird bei einer Kollision ein Deformationselement, z.B. ein Rohr, durch eine oder mehrere in einem Gehäuse angeordnete Matrizen geschoben und dabei verformt bzw. verjüngt, um so die Aufprallenergie wirkungsvoll abzubauen. Durch eine wirksame Zu- und Abschaltung von Matrizenplatten kann der Verjüngungsdurchmesser variiert und somit die Steifigkeit der Crashstruktur angepasst werden. Beispielsweise kann eine für eine zweite Verjüngungsstufe der Struktur verwendete Matrize ausrückbar sein, d.h., bei Wegnahme einer Abstützung durch eine Radialkraft des Deformationselements nach außen gedrückt werden. Die Verjüngungskraft der Crashstruktur ist somit niedriger und es wird weniger Aufprallenergie abgebaut.

Beispiele für eine Umsetzung des Prinzips einer adaptiven Crashstruktur finden sich z.B. in einer Crashstruktur mit adaptiver Energieaufnahme durch ein Entfernen von Versteifungsrippen durch Schneidearbeit oder durch Verjüngung. Eine adaptive Crashbox kann einen integrierten Drucksensor aufweisen oder alternativ eine Sensorkonfiguration, die mit Hilfe von zwei Beschleunigungssensoren eine Soll-Steifigkeit der adaptiven Crashbox bestimmt und auch die Rückhaltemittel der passiven Sicherheit auslöst. Es besteht in diesem Zusammenhang die Möglichkeit einer Umsetzung einer schnellen und genauen Aktuatorik für eine in der Steifigkeit veränderbare Crashstruktur. Eine adaptive Crashstruktur kann einen Wirbelstromaktuator oder ein elastisches Element mit einem integrierten Sensor aufweisen. Ferner besteht die Möglichkeit einer Sensierung der Kollisionsschwere mit Hilfe definiert versagender Verbindungselemente und eines Auslösens reversibler Crashstrukturen anhand der Erkennung einer Mindestschwere.

Durch eine Ausbildung einer brechbaren bzw. ausrückbaren Matrize mit einer Mehrzahl paarweise ansteuerbarer Segmente können anstelle von zwei Kraftstufen beispielsweise vier Kraftstufen einer Crashstruktur darstellbar sein.

Der hier vorgestellte Ansatz bietet eine Alternative zur Abstützung der zweiten Verjüngungsstufe des Aktuators von adaptiven Crashstrukturen. Mittels dieser Alternative kann eine benötigte Aktuierungsenergie reduziert werden, was einen direkten Einfluss auf die Kosten der elektrischen und elektronischen Bauteile hat. Weiterhin ergeben sich Bauraum-Vorteile.

Eine Vorrichtung mit einstellbarer Steifigkeit zum Aufnehmen einer Aufprallenergie, wobei die Vorrichtung ein Gehäuse mit mindestens einem in dem Gehäuse angeordneten Innenelement zum Aufnehmen und Deformieren eines Deformationselements aufweist, wenn das Deformationselement in einer durch die Aufprallenergie bedingten Vorschubrichtung bewegt wird, weist die folgenden Merkmale auf:
eine ausrückbare Matrize als das Innenelement, wobei die ausrückbare Matrize eine Mehrzahl von nicht miteinander verbundenden ausrückbaren Matrizensegmenten umfasst; und
zumindest ein an einem Matrizensegment der Mehrzahl von ausrückbaren Matrizensegmenten angeordnetes Freigabeelement, das ausgebildet ist, um in einem ersten Zustand das Matrizensegment gegenüber einer in einer Querrichtung zu der Vorschubrichtung wirkenden Radialkraft des Deformationselements abzustützen und in einem zweiten Zustand ein Ausrücken des Matrizensegments freizugeben.

Die Vorrichtung kann in einem Fahrzeug zum Schutz der Insassen bei einer Kollision des Fahrzeugs mit einem stationären Objekt oder einem beweglichen Objekt, wie beispielsweise einem weiteren Fahrzeug, installiert sein. Bei der Vorrichtung kann es sich um eine Crashstruktur wie z.B. einen Verjüngungsabsorber handeln. Der Verjüngungsabsorber basiert auf dem Prinzip einer Verformung, hier Verjüngung, des Deformationselements zum Aufnehmen und Abbauen der Aufprallenergie im Kollisionsfall. Die Steifigkeit kann in Abhängigkeit von einer ermittelten Schwere der Kollision zwischen sehr hoch und sehr niedrig mit einer oder mehreren Zwischenstufen eingestellt sein. Entsprechend kann bei einer sehr schweren Kollision und sehr hoher eingestellter Steifigkeit eine umfangreiche Verformung des Deformationselements erfolgen, um eine hohe Aufprallenergie abzubauen. Bei einer sehr leichten Kollision kann bei sehr niedriger eingestellter Steifigkeit die Verformung des Deformationselements gering sein, da weniger Aufprallenergie absorbiert werden muss. Die entsprechenden Zwischenstufen sind von der Kollisionsschwere und unter Umständen auch von einer Aufprallrichtung abhängig. Die Vorrichtung kann in einem Vorderwagen und/oder in einem Heck des Fahrzeugs angeordnet sein.

Das Deformationselement kann als ein längliches Bauteil mit rundem oder eckigem Querschnitt ausgebildet sein. Ansprechend auf die Kollision kann das Deformationselement in der Vorschubrichtung entlang seiner Längsachse durch das Gehäuse bewegt und dabei durch die ausrückbare Matrize aufgenommen und deformiert bzw. verjüngt werden, um die Aufprallenergie zu absorbieren.

Das Gehäuse kann z.B. in Richtung einer Längserstreckung des Deformationselements angeordnet sein und z.B. in einer Ruhestellung der Vorrichtung lediglich einen zum Fahrzeuginneren ausgerichteten Endbereich des Deformationselements umfassen. Das Gehäuse kann beispielsweise aus zwei Gehäusehälften zusammengesetzt sein, wobei die eine Gehäusehälfte eine Öffnung zum Aufnehmen des Deformationselements in das Gehäuse und die andere Gehäusehälfte eine der Öffnung gegenüberliegende weitere Öffnung für einen Austritt des Deformationselements aus dem Gehäuse aufweisen kann. Das Gehäuse kann das Deformationselement oder Teile desselben bei der Bewegung des Deformationselements durch das Gehäuse vollumfänglich umschließen. Für die Unterbringung der ausrückbaren Matrize im Inneren des Gehäuses kann das Gehäuse eine Auswölbung aufweisen. Das Innenelement kann im Ganzen als ein runder oder eckiger Rahmen ausgebildet sein, dessen lichtes Innenmaß zumindest teilweise geringer als ein Querschnitt des Deformationselements vor Eintritt in einen Deformationsabschnitt bzw. Verjüngungsabschnitt des Innenelements ist.

Die Vorschubrichtung kann einer Fahrtrichtung des Fahrzeugs entgegengerichtet sein. Die Vorschubrichtung kann im Wesentlichen einer Aufprallrichtung auf das Fahrzeug entsprechen.

Die ausrückbare Matrize kann ausgebildet sein, um beim Eindringen des Deformationselements auszurücken, wenn die Vorrichtung nicht auf die höchste Steifigkeit eingestellt ist. Die Matrizensegmente können z. B. in gerader Anzahl vorliegen, wobei jeweils gegenüberliegende Matrizensegment in Größe und Form identisch sein können. In einer Ruhestellung der Vorrichtung können die einzelnen Matrizensegmente der ausrückbaren Matrize kettenartig aneinander angrenzend angeordnet sein und z.B. einen Ring bilden. Die ausrückbare Matrize kann so in dem Gehäuse angeordnet sein, dass eine Außenwand der ausrückbaren Matrize von einer Innenwand des Gehäuses beabstandet ist. Beim Ausrücken kann eines oder mehrere der Segmente bei einer Freigabe durch das Freigabeelement durch die Radialkraft des eindringenden Deformationselements von dem Deformationselement weggedrückt, also zu der Innenwand des Gehäuses hingedrückt werden und somit keine Verjüngung des Deformationselements bewirken. Eine solche Bewegung des Matrizensegments, die im Wesentlichen quer zur Vorschubrichtung erfolgt, wird in der vorliegenden Beschreibung als "Ausrücken" des Matrizensegments bezeichnet. Entsprechend kann ein Ausrücken der Matrize ein Ausrücken eines, mehrerer oder aller Matrizensegmente beschreiben. Auf diese Weise kann eine über mehrere Stufen einstellbare Steifigkeit der Vorrichtung realisiert werden, denn es kann davon ausgegangen werden, dass je mehr Matrizensegmente zum Ausrücken freigegeben sind, die Steifigkeit der Vorrichtung umso niedriger ist. Die Innenseite bzw. die Innenseiten der ausrückbaren Matrize können beispielsweise ganz oder teilweise schräg verlaufen, so dass die ausrückbare Matrize eine Art Trichter bildet, der zu der Verjüngung des Deformationselements führen kann, während sich dieses aufgrund der Kollision an der Innenseite der ausrückbaren Matrize entlang bewegt.

Das Freigabeelement kann aus einem Material gefertigt sein, das eine ausreichende Festigkeit aufweist, um das ausrückbare Matrizensegment so gegenüber der Radialkraft des sich entlang der Innenseite(n) der ausrückbaren Matrize bewegenden Deformationselements abzustützen, dass das Deformationselement durch das ausrückbare Matrizensegment verformt werden kann. Es kann eines, mehrere oder alle der verwendeten Matrizensegmente ein derartiges Freigabeelement aufweisen. Je nach Ausführungsform kann ein Freigabeelement eines oder mehrere der Matrizensegmente abstützen bzw. freigeben. Beispielsweise kann das Freigabeelement in dem ersten Zustand in einer ersten Position sein, in der es das Matrizensegment gegenüber der Radialkraft abstützt und zum Freigeben des Matrizensegments in dem zweiten Zustand zu diesem Zweck in eine zweite Position bewegt werden.

Gemäß der Erfindung bilden jeweils zwei gegenüberliegende ausrückbare Matrizensegmente der Matrize ein Segmentpaar. Dabei können die Matrizensegmente des Segmentpaares ausgebildet sein, um mittels des mindestens einen Freigabeelements gemeinsam abgestützt oder gemeinsam zum Ausrücken freigegeben zu werden. Ein gemeinsames Ausrücken der Segmentpaare hat den Vorteil, dass eine Verjüngung des in das Gehäuse einfahrenden Deformationselements bei einer Kollision durch die in ihrem ersten Zustand verharrenden restlichen Matrizensegmente der ausrückbaren Matrize symmetrisch erfolgen kann. So kann ein Verkanten des einfahrenden Deformationselements wirksam vermieden werden.

Weitergehend können ausrückbare Matrizensegmente eines Segmentpaares je eine erste Form aufweisen und ausrückbare Matrizensegmente eines weiteren Segmentpaares je eine zweite Form aufweisen, wobei sich die erste Form von der zweiten Form unterscheidet. Beispielsweise kann die erste Form eine stärkere Verformung des Deformationselements bewirken als die zweite Form oder umgekehrt. So kann eine noch feinere Einstellung der Steifigkeit der Vorrichtung realisiert werden durch eine Auswahl, welches von mehreren Segmentpaaren im Falle einer Kollision ausrückt und welches weiterhin abzustützen ist.

Beispielweise kann die Vorrichtung so aufgebaut sein, dass die ausrückbare Matrize ein erstes ausrückbares Matrizensegment, ein an das erste ausrückbare Matrizensegment angrenzendes zweites ausrückbares Matrizensegment, ein an das zweite ausrückbare Matrizensegment angrenzendes drittes ausrückbares Matrizensegment und ein an das dritte ausrückbare Matrizensegment angrenzendes viertes ausrückbares Matrizensegment umfasst. Dabei können das erste ausrückbare Matrizensegment und das dritte ausrückbare Matrizensegment ein erstes Segmentpaar bilden und das zweite ausrückbare Matrizensegment und das vierte ausrückbare Matrizensegment ein zweites Segmentpaar bilden. Eine Verwendung von vier Matrizensegmenten, von denen jeweils zwei gegenüberliegende ein Segmentpaar bilden, ist besonders effektiv, da hier ein Steuerungsaufwand und eine erweiterte Funktionalität der Crashstruktur in einem optimalen Verhältnis liegen.

Gemäß einer Ausführungsform kann die ausrückbare Matrize mit den vier Matrizensegmenten eine Ringform aufweisen. Es können jeweils zwei benachbarte Matrizensegmente einen gemeinsamen Teilumfangswinkel der ausrückbaren Matrize von 180 Grad bilden. Auch so kann eine symmetrische Verformung des Deformationselements gewährleistet werden. Dabei können die einzelnen Teilumfangswinkel der benachbarten Segmente je 90 Grad aufweisen, oder es kann einer der Winkel größer als 90 Grad und der andere entsprechend kleiner sein. So können die Teilumfangswinkel des ersten und dritten Segments z.B. identisch und größer als 90 Grad sein, während die Teilumfangswinkel des zweiten und vierten Segments ebenfalls identisch und entsprechend kleiner sein können. Diese Ausführungsform bietet den Vorteil, dass ein Verformungsgrad des Deformationselements auch über eine Größe bzw. Länge der einzelnen Matrizensegmente beeinflusst werden kann.

Ferner gemäß der Erfindung ist ein erster Abstand zwischen Deformationsflächen für das Deformationselement bildenden Innenwänden der gegenüberliegenden ausrückbaren Matrizensegmente eines ersten Segmentpaares geringer als ein Abstand zwischen Deformationsflächen für das Deformationselement bildenden Innenwänden der gegenüberliegenden ausrückbaren Matrizensegmenten eines zweiten Segmentpaares. Somit kann ein erster Abstand zwischen einer eine Deformationsfläche für das Deformationselement bildende Innenwand des ersten ausrückbaren Matrizensegments und einer eine Deformationsfläche für das Deformationselement bildende Innenwand des dritten ausrückbaren Matrizensegments geringer sein als ein Abstand zwischen einer eine Deformationsfläche für das Deformationselement bildende Innenwand des zweiten ausrückbaren Matrizensegments und einer eine Deformationsfläche für das Deformationselement bildende Innenwand des vierten ausrückbaren Matrizensegments. Ein geringerer Abstand zwischen Matrizensegment entspricht einer höheren auf das Deformationselement einwirkenden Verformungs- bzw. Verjüngungskraft. So kann auf einfache Weise die Steifigkeit der Vorrichtung zusätzlich oder alternativ über den Abstand der Segmente bestimmt werden.

Auch können die die Deformationsfläche bildende Innenwände der ausrückbaren Matrizensegmente einen abgeschrägten Bereich und einen dem abgeschrägten Bereich in der Vorschubrichtung nachgeordneten geraden Bereich aufweisen. Der abgeschrägte Bereich kann dabei mit einer Mittelachse des Deformationselements einen entgegen der Vorschubrichtung geöffneten spitzen Winkel bilden, während der gerade Bereich parallel zu der Mittelachse verlaufen kann. Somit kann bei den gegenüberliegenden ausrückbaren Matrizensegmente des ersten Segmentpaares der abgeschrägte Bereich länger sein als bei dem den gegenüberliegenden ausrückbaren Matrizensegmenten des zweiten Segmentpaares. Beispielsweise kann bei dem das erste Segmentpaar bildenden ersten ausrückbaren Matrizensegment und dritten ausrückbaren Matrizensegment der abgeschrägte Bereich länger sein als bei dem das zweite Segmentpaar bildenden zweiten ausrückbaren Matrizensegment und vierten ausrückbaren Matrizensegment. Je länger die abgeschrägten Bereiche zweier gegenüberliegender Matrizensegmente sind, desto geringer ist der lichte Abstand zwischen den gegenüberliegenden Matrizensegmenten. Entsprechend kann das Deformationselement durch die längeren Schrägbereiche weitergehend verformt werden als durch die kürzeren, wenn es sich entlang der Innenseiten der Matrize bewegt. Auch auf diese Weise kann über eine Wahl des zum Ausrücken anzusteuernden Segmentpaares auf wirksame und einfache Weise eine Feineinstellung der Steifigkeit der Vorrichtung erfolgen.

Gemäß einer Ausführungsform kann das Freigabeelement ein Brechstift mit einer Sollbruchstelle sein. Der Brechstift kann ausgebildet sein, um in dem ersten Zustand eine erste Position einzunehmen, um das ausrückbare Matrizensegment gegenüber einer in einer Querrichtung zu der Vorschubrichtung wirkenden Radialkraft des Deformationselements abzustützen und in dem zweiten Zustand eine zweite Position einzunehmen, um durch das ausrückbare Matrizensegment an der Sollbruchstelle gebrochen zu werden und ein Ausrücken des ausrückbaren Matrizensegments freizugeben. Der Stift kann als solider Bolzen ausgeführt und beispielsweise entlang der Vorschubrichtung in einem äußeren Randbereich des ausrückbaren Matrizensegments angeordnet sein. Beispielsweise kann der Brechstift in einer Einkerbung in einer Außenwand des ausrückbaren Matrizensegments angeordnet sein oder das ausrückbare Matrizensegment durchstoßen. Die Vorrichtung kann so ausgebildet sein, dass jedes der ausrückbaren Matrizensegmente durch einen derartigen Brechstift abgestützt bzw. freigegeben wird. Die Sollbruchstelle kann so ausgebildet sein, dass der Brechstift an dieser Stelle durch die als Scherkraft auf den Brechstift wirkende Radialkraft des eindringenden Deformationselements brechbar ist. Der Brechstift kann in dem ersten Zustand so in dem Gehäuse angeordnet sein, dass die Sollbruchstelle sich außerhalb eines Wirkungsfeldes, d.h. beispielsweise einem Bereich neben einer Oberfläche des Matrizensegments, der auf das ausrückbare Matrizensegment ausgeübten Radialkraft befindet. Entsprechend kann der Brechstift in dem zweiten Zustand so gegenüber dem ausrückbaren Matrizensegment angeordnet sein, dass ein Maximum der Radialkraft von dem Matrizensegment auf die Sollbruchstelle übertragen wird und so der Brechstift brechen kann. Entsprechend kann die Vorrichtung in dem ersten Zustand eine höhere Steifigkeit bzw. eine härtere Einstellung aufweisen, die einen höheren Aufprallenergieabsorptionsgrad repräsentiert, und in der zweiten Position eine niedrigere Steifigkeit bzw. eine weichere Einstellung aufweisen, die einen niedrigeren Aufprallenergieabsorptionsgrad repräsentiert. Abhängig von einer Funktionalität der Vorrichtung kann sich diese in dem ersten oder in dem zweiten Zustand in einer Grundeinstellung bzw. Ruhestellung befinden. Der Brechstift kann z.B. durch einen Aktuator zwischen dem ersten und dem zweiten Zustand in der oder gegen die Vorschubrichtung bewegt werden, abhängig davon, welche Steifigkeit bei der Vorrichtung eingestellt werden soll. Alternativ kann der Brechstift auch eine weitere Sollbruchstelle aufweisen, wobei dann ein Abstand zwischen der Sollbruchstelle und der weiteren Sollbruchstelle einer Höhe bzw. Dicke des ausrückbaren Matrizensegments entspräche. Diese Ausführungsform des Freigabeelements bietet den Vorteil, dass die Abstützung des ausrückbaren Matrizensegments auf eine sehr platzsparende Weise ermöglicht werden kann. Ferner ergibt sich aus einem kurzen Bewegungsweg des Brechstifts zwischen dem ersten und zweiten Zustand eine besonders kurze Ansprechzeit der Vorrichtung beim Einstellen ihrer Steifigkeit.

Ferner kann die Vorrichtung einen Aktuator zum Versetzen des Freigabeelements aus dem ersten Zustand in den zweiten Zustand oder aus dem zweiten Zustand in den ersten Zustand aufweisen. So kann der Aktuator eingesetzt werden, um die Steifigkeit der Vorrichtung einzustellen. Der Aktuator kann z.B. eine elektrisch, hydraulisch oder pneumatisch betriebene Schalteinrichtung sein, in der entsprechend ihrer Funktionalität ansprechend auf ein Signal eines Steuergeräts der Vorrichtung ein Impuls zum Bewegen des Brechstifts zwischen dem ersten und dem zweiten Zustand erzeugt wird, um die Steifigkeit der Vorrichtung einzustellen.

Die Vorrichtung kann ferner eine nicht-ausrückbare Matrize zum Aufnehmen und Deformieren des Deformationselements aufweisen. Die nicht-ausrückbare Matrize kann der ausrückbaren Matrize in der Vorschubrichtung vorgelagert in dem Gehäuse angeordnet sein. Die nicht-ausrückbare Matrize kann mit einer Außenwand an der Innenwand des Gehäuses anliegend in dem Gehäuse angeordnet sein. Ferner kann die nicht-ausrückbare Matrize durch das Deformationselement unzerstörbar, also aus einem robusteren Material als dieses gebildet sein, so dass der sich bei der Kollision in das Gehäuse bewegende Abschnitt des Deformationselements beim Eindringen in diese Matrize verjüngt werden kann.

Ein Verfahren zum Einstellen einer Steifigkeit einer Vorrichtung mit einstellbarer Steifigkeit zum Aufnehmen einer Aufprallenergie gemäß einer der vorangegangenen Ausführungsformen umfasst die Schritte gemäß Anspruch 8.

Das Verfahren kann beispielsweise in einem Steuergerät durchführt werden, das mit der im Vorhergehenden erläuterten Vorrichtung verbunden oder in diese integriert sein kann. Das Steuergerät kann ausgebildet sein, um die Schritte des erfindungsgemäßen Verfahrens unter Verwendung entsprechender Einrichtungen der im Vorhergehenden erläuterten erfindungsgemäßen Vorrichtung durchzuführen bzw. umzusetzen. Beispielsweise kann es sich bei einer entsprechenden Einrichtung um den im Vorhergehenden erläuterten Aktuator der Vorrichtung handeln, der z. B. über ein Leitungssystem mit dem Steuergerät verbunden sein kann. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1A bis 1C: Prinzipdarstellungen zur Funktionsweise einer Vorrichtung zum Aufnehmen von Aufprallenergie mit einstellbarer Steifigkeit;
- Fig. 2: einen Längsschnitt einer Vorrichtung zum Aufnehmen von Aufprallenergie mit einstellbarer Steifigkeit, gemäß einem Ausführungsbeispiel der vorliegenden Erfindung;
- Fig. 3: einen Querschnitt durch die Vorrichtung zum Aufnehmen von Aufprallenergie mit einstellbarer Steifigkeit aus Fig. 2;
- Fig. 4: eine Prinzipdarstellung eines Fahrzeugs mit einer Vorrichtung zum Aufnehmen von Aufprallenergie mit einstellbarer Steifigkeit, gemäß einem Ausführungsbeispiel der vorliegenden Erfindung; und
- Fig. 5: ein Ablaufdiagramm eines Verfahrens zum Einstellen einer Steifigkeit einer Vorrichtung zum Aufnehmen von Aufprallenergie mit einstellbarer Steifigkeit, gemäß einem Ausführungsbeispiel der vorliegenden Erfindung

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Die im Nachfolgenden erläuterten adaptiven Crashstrukturen ersetzen Teile bestehender Vorderwagenstrukturen in Kraftfahrzeugen. Beispielsweise können die hierin vorgeschlagenen Strukturen die Crashbox und den vorderen Teil der Längsträger ersetzen.

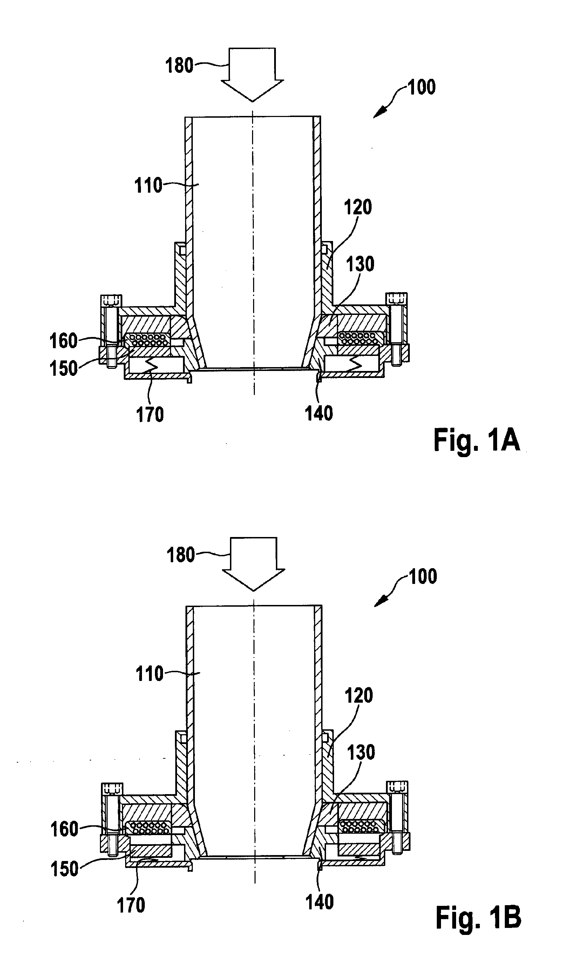

Figuren 1A bis 1C zeigen Prinzipdarstellungen zur Funktionsweise einer Vorrichtung 100 zum Aufnehmen von Aufprallenergie mit einstellbarer Steifigkeit. Die Darstellungen der Figuren 1A bis 1C zeigen jeweils einen Längsschnitt durch die Vorrichtung mit einstellbarer Steifigkeit bzw. adaptive Crashstruktur 100, wie sie beispielsweise in einen Vorderwagen eines Fahrzeugs installiert sein kann. Die adaptive Crashstruktur 100 umfasst ein Deformationselement 110, das hier als ein Rohr ausgebildet ist, sowie ein Gehäuse 120, in dem eine feste bzw. nicht-ausrückbare Matrize 130 und eine brechbare bzw. ausrückbare Matrize 140 angeordnet sind. Ferner umfasst die Vorrichtung 100 einen innerhalb des Gehäuses 120 verschiebbaren Ring 150 zur Abstützung bzw. Freigabe der ausrückbaren Matrize 140, eine angrenzend an den Ring 150 angeordnete stromführende Spule 160 und ein zwischen dem Ring 150 und einer weiteren Wand des Gehäuses 120 angeordnetes Federelement 170. Eine Aufprallrichtung bzw. Vorschubrichtung 180 des Deformationselements 110 entlang seiner mittels einer Punkt-Strich-Linie gekennzeichneten Längserstreckung ist durch einen Pfeil in der Darstellung gekennzeichnet. Die Punkt-Strich-Linie markiert auch eine Mittelachse der Crashstruktur 100.

Die adaptive Crashstruktur 100 weist in erster Hinsicht zwei Steifigkeiten auf. Die Grundeinstellung der Struktur 100 ist die höhere Steifigkeit, die der eines vorderen Längsträgers des Fahrzeugs entspricht. Die zweite Einstellung, auf die umgeschaltet wird, weist eine geringere Steifigkeit auf. Ebenfalls möglich ist es, die adaptive Crashstruktur 100 weiter hinten in der Frontstruktur einzubauen, d.h. als Ersatz eines hinteren Längsträgers. Die Struktur 100 kann ebenso für das Fahrzeugheck verwendet werden, auch wenn hierin lediglich der Vorderwagen betrachtet wird.

Im Falle hoher Aufprallgeschwindigkeiten und somit hoher Kollisionsenergien ist es vorteilhaft, frühzeitig ein hohes Energieabsorptionsniveau zu erreichen, weshalb die höhere Steifigkeit als Grundeinstellung sinnvoll ist. Im Falle geringer Kollisionsenergien ist eine niedrigere Steifigkeit erforderlich, damit die Struktur 100 durch die geringere eingeleitete Kraft verformt werden kann. Dadurch ergeben sich Vorteile bei der Insassenbelastung in Form einer in der Intensität geringeren, dafür aber längeren Belastung. Die beiden Niveaus werden mithilfe eines Aktuators eingestellt.

Fig. 1A zeigt ein Schnittbild der adaptiven Crashstruktur 100 in Ruhestellung. Hier ist der innerhalb des Gehäuses verschiebbare Ring 150 zwischen der ausrückbaren Matrize 140 und einer Wand des Gehäuses 120 angeordnet, so dass die ausrückbare Matrize 140 abgestützt ist. Bei einer Kollision wird das Rohr bzw. Deformationselement 110 in die feste Matrize 130 und in die brechbare Matrize 140 geschoben und dabei stark verjüngt.

Fig. 1B zeigt ein Schnittbild der adaptiven Crashstruktur 100 in aktuierter Stellung. Hier ist der Ring 150 ansprechend auf einen Stromfluss in der Spule 160 nach unten verschoben. Kommt es nun zu einer Kollision, dringt das Rohr 110 ebenfalls in die feste Matrize 130 und in die brechbare Matrize 140 ein. Da der Ring 150 die brechbare Matrize 140 nicht abstützt, kann diese infolge der Aufprägung der Radialkraft durch das Rohr 110 brechen, z.B. an Sollbruchstellen, und ausrücken. Ein Verjüngungsgrad des Rohrs 110 ist somit verglichen mit der in Fig. 1A gezeigten Grundeinstellung geringer.

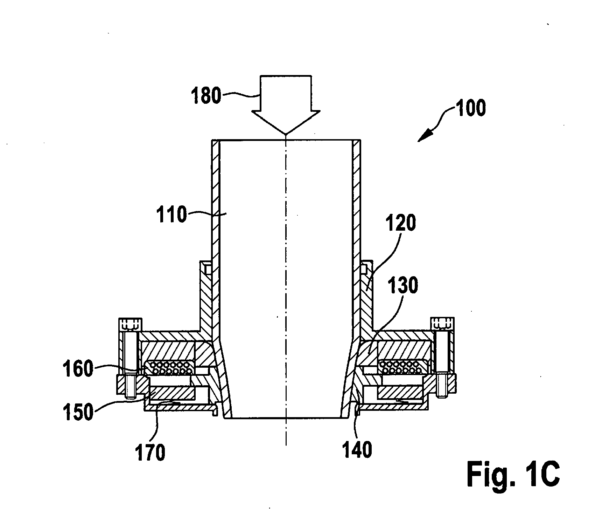

Fig. 1C zeigt ein Schnittbild der adaptiven Crashstruktur 110 im Kollisionsfall, und zwar bei weicher Einstellung, also niedriger Steifigkeit, wie sie anhand der Darstellung in Fig. 1B erläutert ist.

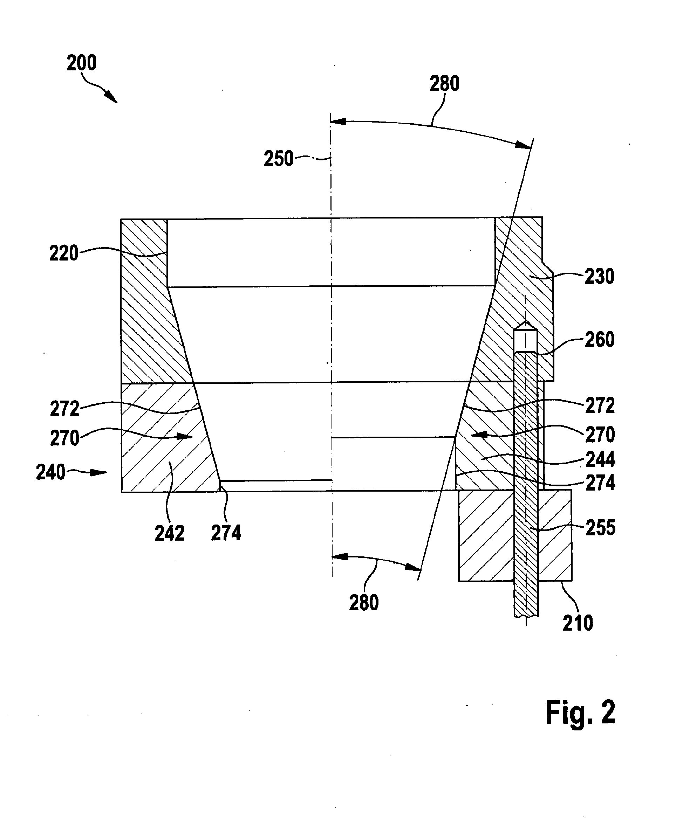

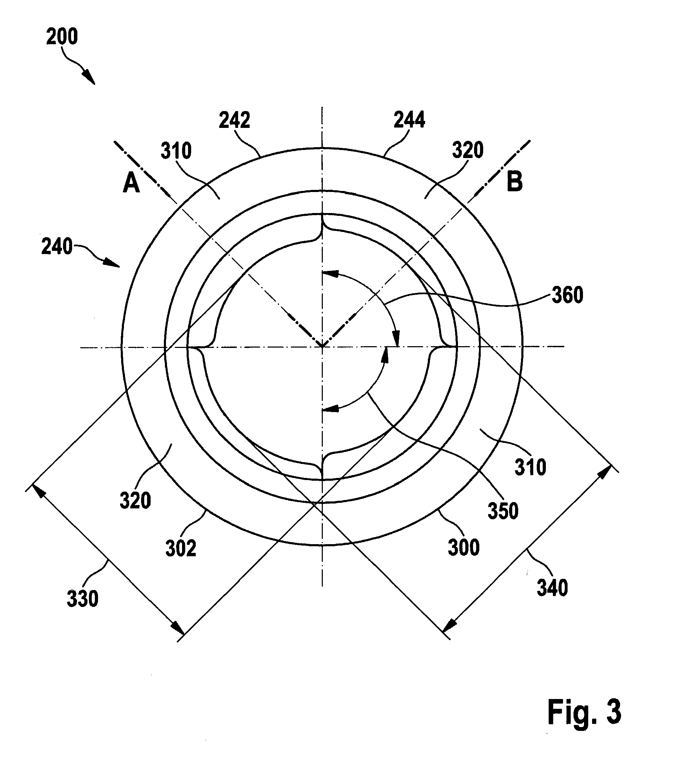

Fig. 2 zeigt in einer Längsschnittdarstellung entlang eines in Fig. 3 gezeigten Schnitts A-B einen Ausschnitt aus einer Vorrichtung 200 mit einstellbarer Steifigkeit zum Aufnehmen einer Aufprallenergie gemäß einem Ausführungsbeispiel der vorliegenden Erfindung. Die Vorrichtung 200 kann an einer Fahrzeugkarosserie, beispielsweise in einen hinter einer Fahrzeugfront gelegenen Vorderwagen eines Fahrzeugs installiert sein. Die Vorrichtung 200 ist als eine adaptive Crashbox mit vier Kraftstufen realisiert und hier in einer Ruhestellung gezeigt. Der Grundaufbau der Vorrichtung 200 entspricht dem Aufbau der anhand der Figuren 1A, 1 B und 1C erläuterten Aufprallstruktur und umfasst ein Gehäuse 210, ein Deformationselement 220, eine nicht-ausrückbare oder feste Matrize 230 sowie eine brechbare bzw. ausrückbare Matrize 240.

Bei dem in Fig. 2 gezeigten Ausführungsbeispiel der Crashstruktur 200 setzt sich die ausrückbare Matrize 240 aus vier nicht miteinander verbundenen Matrizensegmenten zusammen, von denen je zwei gegenüberliegende ein Segmentpaar bilden. Da der Schnitt A-B einen spitzen Winkel bildet, dessen Ursprung in einer Mittelachse 250 der Vorrichtung 200 liegt, zeigt die Schnittdarstellung in Fig. 2 ein erstes Matrizensegment 242 und ein zweites Matrizensegment 244 der ausrückbaren Matrize 240, die nebeneinander und aneinander angrenzend in dem Gehäuse 210 angeordnet sind.

Im Unterschied zu der in den Figuren 1A bis 1C gezeigten Crashstruktur, bei der die brechbare Matrize durch einen Ring abgestützt bzw. freigegeben wird, werden hier die einzelnen Matrizensegmente durch je einen Brechstift 255 mit einer Sollbruchstelle 260 gegenüber dem Deformationselement 220 abgestützt. Aufgrund des Winkelschnitts A-B ist in der Darstellung in Fig. 2 lediglich der Brechstift 255 gezeigt, der zur Abstützung des zweiten Matrizensegments 244 vorgesehen ist. Der Brechstift 255 erstreckt sich parallel zu der Mittelachse 250 der Crashstruktur 200. Der Brechstift 255 durchgreift einen Randbereich des ausrückbaren Matrizensegments 244 und ist mit einem Kopfende in der nicht-ausrückbaren Matrize 230 und mit einem Fußende in dem Gehäuse 210 angeordnet. Die in Fig. 2 nicht dargestellten weiteren drei Brechstifte sind ebenfalls auf die beschriebene Weise in den jeweiligen Segmenten angeordnet.

Da die Vorrichtung 200 in der Darstellung in der Ruhestellung gezeigt ist, befindet sich der Brechstift 255 hier in einem ersten Zustand, d. h. er befindet sich in einer Position, in der die Sollbruchstelle 260 durch die feste Matrize 230 abgedeckt ist. Entsprechend ist das Segment 244 durch den robusten Bereich des Brechstifts 250 gegenüber einer Radialkraft des einfahrenden Deformationselements 220 abgestützt. Verbleibt der Brechstift 250 im Kollisionsfall in diesem ersten Zustand, rückt das Matrizensegment 244 nicht aus und übt eine Verformungskraft auf das Deformationselement 220 aus.

In einem zweiten Zustand (in der Darstellung in Fig. 2 nicht gezeigt) befindet sich der Brechstift in einer Position, in der die Sollbruchstelle 260 auf einer Höhe mit einer Grenzfläche des ausrückbaren Matrizensegments 244 mit der festen Matrize 230 liegt. Hier bricht im Kollisionsfall der Stift 255 an der Sollbruchstelle 260 und das Segment 244 rückt aus und übt keine Deformationskraft auf das Deformationselement 220 aus. Die Sollbruchstelle 260 kann in Form einer Kerbe oder Nut oder eines Bereichs des Stifts 255 mit geringerer Festigkeit vorliegen. Der Brechstift bzw. die Brechstifte 255 können mit bekannten Prinzipien wie z.B. Induktion, Pyrotechnik, usw. z.B. einzeln oder paarweise angesteuert werden. Aus Symmetriegründen bei der Deformation ist es allerdings erforderlich die gleichartigen gegenüberliegenden Segmente gleichzeitig anzusteuern.

Wie die Darstellung in Fig. 2 zeigt, gehören die Matrizensegmente 242, 244 unterschiedlichen Segmenttypen an und weisen entsprechende geometrische Unterschiede auf. An das Deformationselement 220 angrenzende Innenwände 270 weisen je einen abgeschrägten Bereich 272 und einen geraden Bereich 274 auf. So ist bei dem ersten Matrizensegment 242, das einem ersten Segmenttyp angehört, der abgeschrägte Bereich 272 länger als bei dem einem zweiten Segmenttyp angehörenden zweiten Matrizensegment 244. Dagegen ist der abgeschrägte Bereich 272 des zweiten Matrizensegments 244 steiler als der des ersten Matrizensegments 242. Entsprechend wird durch das erste Segment 242 bei gegebener Abstützung durch den Brechstift 250 eine höhere Deformationskraft auf das Deformationselement 220 ausgeübt als durch das zweite Segment 244. Gebogene Doppelpfeile in der Darstellung kennzeichnen einen Winkel 280, der einen Grad der Abschrägung der Innenwand 270 des ausrückbaren Matrizenelements 244 gegenüber der Mittelachse 250 der Vorrichtung 200 beschreibt. Wie es aus Fig. 2 ersichtlich ist, weist eine Innenwand der der ausrückbaren Matrize 240 vorgelagerten nicht-ausrückbaren Matrize 230 einen identischen Winkel 280 auf, so dass ein Verkanten des einrückenden Deformationselements 220 bei höherer eingestellter Steifigkeit der Vorrichtung 200 wirksam vermieden werden kann. Die feste Matrize 230 bildet bei der Crashstruktur 200 den Reduzierring niedrigster Kraftstufe, der bei jedem Aufprall des Fahrzeugs zum Einsatz kommt. Ein Einsatz beider, eines oder keines der zwei Segmentpaare hängt von einer ermittelten Kollisionsschwere ab.

Fig. 3 zeigt einen Querschnitt durch die Vorrichtung 200 zum Aufnehmen von Aufprallenergie mit einstellbarer Steifigkeit aus Fig. 2 auf einer Höhe der ausrückbaren Matrize 240, gemäß einem Ausführungsbeispiel der vorliegenden Erfindung. Punkt-Strich-Linien A und B kennzeichnen den Längsschnitt durch die Vorrichtung 200 aus Fig. 2. In der Darstellung in Fig. 3 sind die vier Bestandteile der ausrückbaren Matrize 240, das erste Matrizensegment 242, das zweite Matrizensegment 244, ein drittes Matrizensegment 300 und ein viertes Matrizensegment 302 gezeigt. Wiederum ist hier die Ruhestellung der Crashstruktur 200 gezeigt, in der die nicht miteinander verbundenen Matrizensegmente 242, 244, 300, 302 aneinander angrenzend angeordnet sind.

Durch die Segmentierung der ausrückbaren Matrize 240 ist es möglich, die Segmente 242, 244, 300, 302 geometrisch unterschiedlich zu gestalten. Wie die Darstellung in Fig. 3 zeigt, gehören das erste Matrizensegment 242 und das dem ersten Matrizensegment 242 gegenüberliegende dritte Matrizensegment 300 dem in Zusammenhang mit Fig. 2 erläuterten ersten Segmenttyp an und das zweite Matrizensegment 244 und das dem zweiten Matrizensegment 244 gegenüberliegende vierte Matrizensegment 302 dem in Zusammenhang mit Fig. 2 erläuterten zweiten Segmenttyp an. Entsprechend bilden das erste Matrizensegment 242 und das dritte Matrizensegment 300 gemeinsam ein erstes Segmentpaar 310 das zweite Matrizensegment 244 und das vierte Matrizensegment 302 gemeinsam ein zweites Segmentpaar 320. Die Segmente jedes der Segmentpaare 310, 320 werden in Abhängigkeit von der eingestellten Steifigkeit der Vorrichtung 200 stets gemeinsam abgestützt oder zum Ausrücken freigegeben. Entsprechend bildet das erste Segmentpaar 310 einen ersten Austrittsdurchmesser 330 für das Deformationselement und das zweite Segmentpaar 320 einen zweiten Austrittsdurchmesser 340 für das Deformationselement. Bei dem in Figuren 2 und 3 gezeigten Ausführungsbeispiel der Crashstruktur 200 ist aufgrund der unterschiedlichen geometrischen Form der Segmentpaare 310, 320 der Austrittsdurchmesser 330 geringer als der Austrittsdurchmesser 340. Entsprechend bewirkt eine Abstützung des Segmentpaares 310 bei einer Aufprallenergieabsorption im Kollisionsfall eine stärkere Verformung des Deformationselements und damit eine größere Energieabsorption als eine Abstützung des Segmentpaares 320.

Bei dem in Fig. 3 dargestellten Ausführungsbeispiel der Crashstruktur 200 weisen die gegenüberliegenden Matrizensegmente 242, 300 einen ersten Umfangswinkel 350 von 90 Grad und die gegenüberliegenden Matrizensegmente 244 302 einen zweiten Umfangswinkel 360 von ebenfalls 90 Grad auf. Alternativ können die Umfangswinkel der einzelnen Segmente 242, 244, 300, 302 auch von 90 Grad abweichen, wobei eine Summe der Umfangswinkel von Segmenten eines Segmentpaares aus Gründen der Symmetrie bei der Deformation stets 180 Grad beträgt.

Mit dem Einsatz der ausrückbaren Matrize 240, wie sie hierin beschrieben ist, kann die Crashstruktur 200 mit vier Kraftabstufungen im Verjüngungsprozess realisiert werden. Werden bei der Crashstruktur 200 beispielsweise solche Abmessungen gewählt, dass der Austrittsdurchmesser 330 kleiner als der Austrittsdurchmesser 340 und der erste Umfangswinkel 350 größer oder gleich dem zweiten Umfangswinkel 360 ist, ergeben sich vier Kraftabstufungen in Form von vier unterschiedlichen Abstützungsvarianten mit in der Reihenfolge der nachfolgenden Beschreibung steigenden Deformationskräften.

In einer ersten Kraftstufe wird im Kollisionsfall kein Segmenttyp abgestützt, weil es sich z.B. um eine sehr leichte Kollision handelt. Die Deformationskraft der Vorrichtung 200 ist minimal. In einer zweiten Kraftstufe wird der zweite Segmenttyp, entsprechend der Fig. 3 also das Segmentpaar 320, abgestützt und der erste Segmenttyp, also das Segmentpaar 310, ist zum Ausrücken freigegeben. Entsprechend ist die Steifigkeit der Crashstruktur 200 auf eine niedere Zwischenstufe eingestellt, es ist mehr Deformationskraft als bei der ersten Kraftstufe vorhanden. In einer dritten Kraftstufe wird der erste Segmenttyp, also das Segmentpaar 310 abgestützt, und der zweite Segmenttyp, also das Segmentpaar 320, ist zum Ausrücken freigegeben. Somit ist die Steifigkeit der Crashstruktur 200 auf eine hohe Zwischenstufe eingestellt. Im Vergleich mit der zweiten Kraftstufe ergibt daraus eine höhere Deformationskraft und somit ein höheres Energieabsorptionsniveau. In einer vierten Kraftstufe werden beide Segmenttypen, also das Segmentpaar 310 und das Segmentpaar 320 abgestützt. Entsprechend ist eine maximale Steifigkeit eingestellt und das Kraftniveau ist ebenfalls maximal, wie es z.B. bei einem Aufprall mit sehr großer Kollisionsschwere zum optimalen Schutz der Fahrzeuginsassen erforderlich ist. Hier werden bei einem eindringenden Rohr bzw. Deformationselement die Radialkräfte auf alle Segmente 242, 244, 300, 302 der ausrückbaren Matrize 240 über die jeweiligen Freigabeelemente abgeleitet, und das Rohr wird stark verjüngt, wodurch das Energieabsorptionsniveau auf dieser Kraftstufe am höchsten liegt.

Durch eine genaue Abstimmung der Segmentdurchmesser und -winkel können die Kraftniveaus an unterschiedliche Spezifikationen optimal angepasst werden.

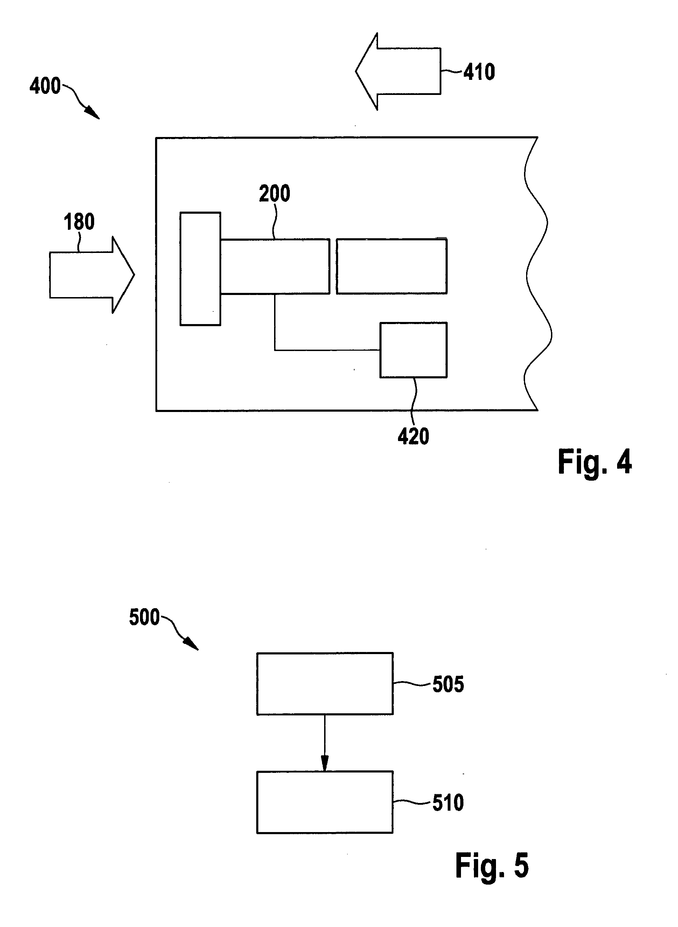

Fig. 4 zeigt eine Prinzipdarstellung eines Fahrzeugs 400 mit der adaptiven Crashstruktur 200, wie sie anhand der vorangegangen Figuren erläutert wurde.

Gezeigt ist eine Frontstruktur des Fahrzeugs 400. Diese umfasst einen Querträger und daran anschließend die Vorrichtung 200, die hier einen vorderen Teil des Längsträgers ersetzt oder ergänzt. Auch ein Einsatz der Vorrichtung 200 an dem hinteren Längsträger des Fahrzeugs 400 ist möglich. Somit kann die Crashstruktur 200 zusätzlich oder alternativ in einem Heck des Fahrzeugs 400 implementiert sein. Ein Pfeil kennzeichnet eine Fahrtrichtung 410 des Fahrzeugs 400. Ein weiterer Pfeil kennzeichnet die Vorschubrichtung 180, in der bei einer Kollision des Fahrzeugs 400, z.B. in Form eines Frontal- oder Schrägaufpralls, die Aufprallenergie zu absorbieren ist, und in der dementsprechend ein in Fig. 4 nicht gezeigtes Deformationselement der Vorrichtung 200 in der Vorrichtung 200 bewegt wird, um durch Deformation die Aufprallenergie zu absorbieren. Über ein Leitungssystem, z.B. einen CAN-Bus, ist die Crashstruktur 200 mit einem Steuergerät 420 des Fahrzeugs 400 gekoppelt. Das Steuergerät 420 ermittelt eine Kollisionsschwere bei einem Aufprall des Fahrzeugs 400 und gibt entsprechende Ansteuerbefehle an einen Aktuator der Vorrichtung 200 zum Abstützen bzw. Freigeben von Matrizensegmenten der Vorrichtung aus.

Fig. 5 zeigt ein Ablaufdiagramm eines Ausführungsbeispiels eines Verfahrens 500 zum Einstellen einer Steifigkeit einer Vorrichtung mit einstellbarer Steifigkeit zum Aufnehmen einer Aufprallenergie auf ein Fahrzeug, wie sie im Vorhergehenden ausführlich erläutert wurde. Das Verfahren 500 wird in Zusammenhang mit einem Steuergerät des Fahrzeugs, das mit der Vorrichtung elektrisch verbunden ist, im Falle einer Kollision des Fahrzeugs durchgeführt. In einem Schritt 505 wird eine von dem Steuergerät ermittelte Information über eine Kollisionsschwere der Kollision empfangen. In einem Schritt 510 werden gemäß der hierin vorgestellten Ausführungsform der Crashstruktur in Abhängigkeit von der Kollisionsschwere einzelne oder alle Freigabeelemente für die ausrückbaren Matrizensegmente aus einem ersten Zustand in einen zweiten Zustand versetzt, also mittels des Aktuators aus der ersten Position, in der die Freigabeelemente die jeweiligen Segmente abstützen, in die zweite Position geschoben, in der sie durch ein Brechen an vorgegebener Position die entsprechenden Matrizensegmente zum Ausrücken freigeben. Entsprechend wird die Vorrichtung in dem Schritt 510 aus einer Grundeinstellung, in der eine höchste Stufe der Steifigkeit vorliegt, in eine weichere Einstellung verbracht, in der die Steifigkeit entsprechend herabgesetzt ist.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

## Patentansprüche

1. Vorrichtung (200) mit einstellbarer Steifigkeit zum Aufnehmen einer Aufprallenergie, wobei die Vorrichtung ein Gehäuse (210) mit mindestens einem in dem Gehäuse (210) angeordneten Innenelement zum Aufnehmen und Deformieren eines Deformationselements (220) aufweist, wenn das Deformationselement (220) in einer durch die Aufprallenergie bedingten Vorschubrichtung (180) bewegt wird, und wobei die Vorrichtung die folgenden Merkmale aufweist:
eine ausrückbare Matrize (240) als das Innenelement, wobei die ausrückbare Matrize eine Mehrzahl von nicht miteinander verbundenden ausrückbaren Matrizensegmenten (242, 244; 300, 302) umfasst; und
zumindest ein an einem Matrizensegment der Mehrzahl von ausrückbaren Matrizensegmenten angeordnetes Freigabeelement (255), das ausgebildet ist, um in einem ersten Zustand das Matrizensegment gegenüber einer in einer Querrichtung zu der Vorschubrichtung (180) wirkenden Radialkraft des Deformationselements abzustützen und in einem zweiten Zustand ein Ausrücken des Matrizensegments freizugeben, wobei jeweils zwei gegenüberliegende ausrückbare Matrizensegmente (242, 244; 300, 302) ein Segmentpaar (310, 320) bilden, wobei die Matrizensegmente (242, 244; 300, 302) eines Segmentpaares (310, 320) ausgebildet sind, um mittels des mindestens einen Freigabeelements (255) gemeinsam abgestützt oder gemeinsam zum Ausrücken freigegeben zu werden, **dadurch gekennzeichnet, dass**
ein erster Abstand (330) zwischen Deformationsflächen für das Deformationselement (220) bildenden Innenwänden (270) der gegenüberliegenden ausrückbaren Matrizensegmente (242; 300) eines ersten Segmentpaares (310) geringer ist als ein Abstand (340) zwischen Deformationsflächen für das Deformationselement (220) bildenden Innenwänden (270) der gegenüberliegenden ausrückbaren Matrizensegmenten (244; 302) eines zweiten Segmentpaares (320).

2. Vorrichtung (200) gemäß Anspruch 1, bei der ausrückbare Matrizensegmente (242, 244; 300, 302) eines Segmentpaares (310, 320) je eine erste Form aufweisen und ausrückbare Matrizensegmente eines weiteren Segmentpaares eine zweite Form aufweisen, die sich von der ersten Form unterscheidet.

3. Vorrichtung (200) gemäß einem der vorangegangenen Ansprüche, bei der die ausrückbare Matrize (240) ein erstes ausrückbares Matrizensegment (242), ein an das erste ausrückbare Matrizensegment angrenzendes zweites ausrückbares Matrizensegment (244), ein an das zweite ausrückbare Matrizensegment angrenzendes drittes ausrückbares Matrizensegment (300) und ein an das dritte ausrückbare Matrizensegment angrenzendes viertes ausrückbares Matrizensegment (302) umfasst, wobei das erste ausrückbare Matrizensegment und das dritte ausrückbare Matrizensegment ein erstes Segmentpaar (310) bilden und das zweite ausrückbare Matrizensegment und das vierte ausrückbare Matrizensegment ein zweites Segmentpaar (320) bilden.

4. Vorrichtung (200) gemäß Anspruch 3, bei der die ausrückbare Matrize (240) eine Ringform aufweist, wobei jeweils zwei benachbarte Matrizensegmente (242, 244; 300, 302) einen gemeinsamen Teilumfangswinkel der ausrückbaren Matrize von 180 Grad bilden.

5. Vorrichtung (200) gemäß einem der vorangegangenen Ansprüche, bei der die die Deformationsfläche bildende Innenwände (270) der ausrückbaren Matrizensegmente (242, 244; 300, 302) einen abgeschrägten Bereich (272) und einen dem abgeschrägten Bereich in der Vorschubrichtung (180) nachgeordneten geraden Bereich (274) aufweist, wobei der abgeschrägte Bereich mit einer Mittelachse (250) des Deformationselements (220) einen entgegen der Vorschubrichtung (180) geöffneten spitzen Winkel (280) bildet und der gerade Bereich parallel zu der Mittelachse verläuft, und wobei bei den gegenüberliegenden ausrückbaren Matrizensegmente (242; 300) des ersten Segmentpaares (310) der abgeschrägte Bereich länger ist als bei dem den gegenüberliegenden ausrückbaren Matrizensegmenten (244; 302) des zweiten Segmentpaares (320).

6. Vorrichtung (200) gemäß einem der vorangegangenen Ansprüche, bei der das Freigabeelement (255) ein Brechstift mit einer Sollbruchstelle (260) ist, wobei der Brechstift ausgebildet ist, um in dem ersten Zustand eine erste Position einzunehmen, um das ausrückbare Matrizensegment (242, 244; 300, 302) gegenüber einer in einer Querrichtung zu der Vorschubrichtung (180) wirkenden Radialkraft des Deformationselements (220) abzustützen und in dem zweiten Zustand eine zweite Position einzunehmen, um durch das ausrückbare Matrizensegment an der Sollbruchstelle gebrochen zu werden und ein Ausrücken des ausrückbaren Matrizensegments freizugeben.

7. Vorrichtung (200) gemäß einem der vorangegangenen Ansprüche, die ferner einen Aktuator zum Versetzen des Freigabeelements (255) aus dem ersten Zustand in den zweiten Zustand oder aus dem zweiten Zustand in den ersten Zustand aufweist, um die Steifigkeit der Vorrichtung einzustellen.

8. Verfahren (500) zum Einstellen einer Steifigkeit einer Vorrichtung (200) mit einstellbarer Steifigkeit zum Aufnehmen einer Aufprallenergie gemäß einem der vorangegangenen Ansprüche, **dadurch gekennzeichnet, dass** das Verfahren die folgenden Schritte aufweist:
Gemeinsames Abstützen oder gemeinsames Freigeben der gegenüberliegenden ausrückbaren Matrizensegmente (242; 300) des ersten Segmentpaares (310) und gemeinsames Abstützen oder gemeinsames Freigeben der gegenüberliegenden ausrückbaren Matrizensegmente (244; 302) des zweiten Segmentpaares (320), um die Steifigkeit der Vorrichtung (200) auf ein geringeres oder höheres Niveau einzustellen.

## Claims

1. Device (200) with adjustable rigidity for absorbing impact energy, the device having a housing (210) that has at least one inner element arranged in the housing (210) and is intended for receiving and deforming a deformation element (220) when the deformation element (220) is moved in an advancing direction (180) caused by the impact energy, and the device having the following features:
a disengageable die (240) as the inner element, the disengageable die comprising a plurality of disengageable die segments (242, 244; 300, 302) that are not connected to one another; and
at least one release element (255), which is arranged on a die segment of the plurality of disengageable die segments and is designed to support the die segment with respect to a radial force of the deformation element acting in a transverse direction in relation to the advancing direction (180) in a first state and release a disengagement of the die segment in a second state, two opposing disengageable die segments (242, 244; 300, 302) respectively forming a segment pair (310, 320), the die segments (242, 244; 300, 302) of a segment pair (310, 320) being designed to be jointly supported or jointly released for disengagement by means of the at least one release element (255), **characterized in that**
a first distance (330) between inner walls (270) of the opposing disengageable die segments (242; 300) of a first segment pair (310) that form deformation surfaces for the deformation element (220) is smaller than a distance (340) between inner walls (270) of the opposing disengageable die segments (244; 302) of a second segment pair (320) that form deformation surfaces for the deformation element (220).

2. Device (200) according to Claim 1, in which disengageable die segments (242, 244; 300, 302) of a segment pair (310, 320) each have a first form and disengageable die segments of a further segment pair have a second form, which differs from the first form.

3. Device (200) according to one of the preceding claims, in which the disengageable die (240) comprises a first disengageable die segment (242), a second disengageable die segment (244), adjacent to the first disengageable die segment, a third disengageable die segment (300), adjacent to the second disengageable die segment, and a fourth disengageable die segment (302), adjacent to the third disengageable die segment, the first disengageable die segment and the third disengageable die segment forming a first segment pair (310) and the second disengageable die segment and the fourth disengageable die segment forming a second segment pair (320).

4. Device (200) according to Claim 3, in which the disengageable die (240) has an annular form, two neighbouring die segments (242, 244; 300, 302) respectively forming a common partial angle at circumference of the disengageable die of 180 degrees.

5. Device (200) according to one of the preceding claims, in which the inner walls (270) of the disengageable die segments (242, 244; 300, 302) that form the deformation surfaces have a bevelled region (272) and a straight region (274), arranged after the bevelled region in the advancing direction (180), the bevelled region forming with the centre axis (250) of the deformation element (220) an acute angle (280) that is open counter to the advancing direction (180) and the straight region running parallel to the centre axis, and the bevelled region being longer in the case of the opposing disengageable die segments (242; 300) of the first segment pair (310) than in the case of the opposing disengageable die segments (244; 302) of the second segment pair (320).

6. Device (200) according to one of the preceding claims, in which the release element (255) is a rupture pin with a predetermined breaking point (260), the rupture pin being designed to assume a first position in the first state, in order to support the disengageable die segment (242, 244; 300, 302) with respect to a radial force of the deformation element (220) acting in a transverse direction in relation to the advancing direction (180) and to assume a second position in the second state, in order to be ruptured at the predetermined breaking point by the disengageable die segment and release a disengagement of the disengageable die segment.

7. Device (200) according to one of the preceding claims, which also has an actuator for transferring the release element (255) from the first state into the second state or from the second state into the first state, in order to adjust the rigidity of the device.

8. Method (500) for adjusting a rigidity of a device (200) with adjustable rigidity for absorbing impact energy according to one of the preceding claims, **characterized in that** the method has the following steps:
jointly supporting or jointly releasing the opposing disengageable die segments (242; 300) of the first segment pair (310) and jointly supporting or jointly releasing the opposing disengageable die segments (244; 302) of the second segment pair (320), in order to adjust the rigidity of the device (200) to a lower or higher level.

## Revendications

1. Dispositif (200) de raideur ajustable pour recevoir une énergie de choc, le dispositif présentant un boîtier (210) avec au moins un élément intérieur disposé dans le boîtier (210) pour recevoir et déformer un élément de déformation (220) lorsque l'élément de déformation (220) est déplacé dans une direction d'avance (180) sous l'effet de l'énergie de choc, le dispositif présentant les caractéristiques suivantes :
une matrice débrayable (240) en tant qu'élément intérieur, la matrice débrayable comprenant une pluralité de segments de matrice débrayables (242, 244 ; 300, 302) non connectés les uns aux autres ; et
au moins un élément de libération (255) disposé au niveau d'un segment de matrice de la pluralité de segments de matrice débrayables, qui est réalisé, dans un premier état, pour assister le segment de matrice par rapport à une force radiale de l'élément de déformation agissant dans une direction transversale à la direction d'avance (180) et, dans un deuxième état, pour libérer un débrayage du segment de matrice, à chaque fois deux segments de matrice débrayables opposés (242, 244 ; 300, 302) formant une paire de segments (310, 320), les segments de matrice (242, 244 ; 300, 302) d'une paire de segments (310, 320) étant réalisés pour être supportés conjointement au moyen de l'au moins un élément de libération (255) ou pour être libérés conjointement en vue du débrayage, **caractérisé en ce**
**qu'**une première distance (330) entre des parois internes (270), formant des faces de déformation pour l'élément de déformation (220), des segments de matrice débrayables opposés (242 ; 300) d'une première paire de segments (310) est inférieure à une distance (340) entre des parois internes (270), formant des faces de déformation pour l'élément de déformation (220), des segments de matrice débrayables opposés (244 ; 302) d'une deuxième paire de segments (320).

2. Dispositif (200) selon la revendication 1, dans lequel des segments de matrice débrayables (242, 244 ; 300, 302) d'une paire de segments (310, 320) présentent à chaque fois une première forme et des segments de matrice débrayables d'une autre paire de segments présentent une deuxième forme qui se distingue de la première forme.

3. Dispositif (200) selon l'une quelconque des revendications précédentes, dans lequel la matrice débrayable (240) comprend un premier segment de matrice débrayable (242), un deuxième segment de matrice débrayable (244) adjacent au premier segment de matrice débrayable, un troisième segment de matrice débrayable (300) adjacent au deuxième segment de matrice débrayable et un quatrième segment de matrice débrayable (302) adjacent au troisième segment de matrice débrayable, le premier segment de matrice débrayable et le troisième segment de matrice débrayable formant une première paire de segments (310) et le deuxième segment de matrice débrayable et le quatrième segment de matrice débrayable formant une deuxième paire de segments (320).

4. Dispositif (200) selon la revendication 3, dans lequel la matrice débrayable (240) présente une forme annulaire, à chaque fois deux segments de matrice adjacents (242, 244 ; 300, 302) formant un angle périphérique partiel commun de 180 degrés de la matrice débrayable.

5. Dispositif (200) selon l'une quelconque des revendications précédentes, dans lequel les parois internes (270), formant des faces de déformation, des segments de matrice débrayables (242, 244 ; 300, 302) présentent une région biseautée (272) et une région droite (274) montée après la région biseautée dans la direction d'avance (180), la région biseautée formant avec un axe médian (250) de l'élément de déformation (220) un angle aigu (280) ouvert dans le sens opposé à la direction d'avance (180) et la région droite s'étendant parallèlement à l'axe médian, et dans le cas des segments de matrice débrayables opposés (242 ; 300) de la première paire de segments (310), la région biseautée étant plus longue que dans le cas des segments de matrice débrayables opposés (244 ; 302) de la deuxième paire de segments (320).

6. Dispositif (200) selon l'une quelconque des revendications précédentes, dans lequel l'élément de libération (255) est une goupille de rupture avec un point destiné à la rupture (260), la goupille de rupture étant réalisée pour prendre dans le premier état une première position afin de supporter le segment de matrice débrayable (242, 244 ; 300, 302) par rapport à une force radiale de l'élément de déformation (220) agissant dans une direction transversale à la direction d'avance (180) et, dans le deuxième état, pour adopter une deuxième position afin d'être rompue par le segment de matrice débrayable au niveau du point destiné à la rupture et de libérer un débrayage du segment de matrice débrayable.

7. Dispositif (200) selon l'une quelconque des revendications précédentes, présentant en outre un actionneur pour décaler l'élément de libération (255) du premier état dans le deuxième état ou du deuxième état dans le premier état afin d'ajuster la raideur du dispositif.

8. Procédé (500) pour ajuster une raideur d'un dispositif (200) de raideur ajustable pour recevoir une énergie de choc selon l'une quelconque des revendications précédentes, **caractérisé en ce que** le procédé présente les étapes suivantes :
supporter conjointement ou libérer conjointement les segments de matrice débrayables opposés (242 ; 300) de la première paire de segments (310) et supporter conjointement ou libérer conjointement les segments de matrice débrayables opposés (244 ; 302) de la deuxième paire de segments (320), afin d'ajuster la raideur du dispositif (200) à un niveau inférieur ou supérieur.
